# EUROPÄISCHE PATENTSCHRIFT

(11) **EP 2 821 729 B1**
(45) Veröffentlichungstag und Bekanntmachung des Hinweises auf die Patenterteilung: **02.01.2019**
(21) Anmeldenummer: 14172912.9
(22) Anmeldetag: 18.06.2014
(51) Int. Cl.: F24H 1/10, F24H 9/00, F24H 9/18, H05B 6/02, B60H 1/22, H05B 6/10

(54) **Wärmeübertragereinrichtung und Heizvorrichtung**
Heat exchange device and heating device
Échangeur thermique et dispositif de chauffage

(30) Priorität: 19.06.2013 DE 102013211578
(43) Veröffentlichungstag der Anmeldung: 07.01.2015
(73) Patentinhaber: MAHLE Behr GmbH & Co. KG, 70469 Stuttgart (DE)
(72) Erfinder: Seewald, Wolfgang, 71732 Tamm (DE); Krumbach, Karl-Gerd, 71576 Burgstetten (DE); Kohl, Michael, 74321 Bietigheim-Bissingen (DE)
(74) Vertreter: Grauel, Andreas

(56) Entgegenhaltungen:
- DE-A1- 2 146 724
- DE-B- 1 054 191
- FR-A1- 2 777 411

## Beschreibung

### Technisches Gebiet

Die Erfindung betrifft eine Wärmeübertragereinrichtung für eine Heizvorrichtung nach dem Oberbegriff von Anspruch 1 und eine Heizvorrichtung für ein Kraftfahrzeug.

### Stand der Technik

Heizvorrichtungen sind im Stand der Technik bekannt. So gibt es luftseitige Heizvorrichtungen, die sogenannte PTC-Heizelemente aufweisen, die elektrisch bestromt werden und sich dadurch erwärmen. Über luftseitige Lamellen, die mit den PTC-Elementen in Kontakt sind, wird die Wärme auf die durchströmende Luft übertragen. Diese Heizvorrichtungen weisen jedoch einen grundsätzlich anderen Aufbau auf, als für flüssige Medien notwendig.

Heizvorrichtungen für flüssige Medien sind mit einem geschlossenen Gehäuse versehen, die mit einem Fluidkanal ausgebildet sind, der einen Fluideinlass und einen Fluidauslass aufweist, wobei in das Gehäuse ein Heizelement ragt, das mit einem PTC-Element beheizt wird.

Aus der nicht veröffentlichten Patentanmeldung der Erfinderin ist eine Heizvorrichtung bekannt, die ein Gehäuse mit einem darin angeordneten Fluidkanal mit einem Fluideinlass und einem Fluidauslass aufweist, wobei in dem Gehäuse ein ein magnetisches Wechselfeld erzeugendes Element vorgesehen ist, das durch zumindest eine Wandung von dem Fluidkanal abgedichtet abgeteilt ist, wobei weiterhin zumindest ein metallisches Flächenheizelement vorgesehen ist, welches durch das magnetische Wechselfeld aufheizbar ist, wobei das zumindest eine Flächenheizelement im Fluidkanal angeordnet ist.

Die FR 2 777 411 A1 offenbart eine Heizeinrichtung, bei welcher ein Fluid mittels Reibung erwärmt wird, wobei auch ein magnetisches Wechselfeld eingesetzt wird zum Erwärmen des Fluids. Dieses Dokument offenbart den Oberbegriff des Anspruchs 1.

Die DE 1 054 191 B offenbart auch eine Heizeinrichtung mit einer Spule zur Erzeugung eines magnetischen Wechselfelds.

### Darstellung der ErFindung, Aufgabe, Lösung, Vorteile

Es ist die Aufgabe der Erfindung, eine gegenüber dem Stand der Technik verbesserte Heizvorrichtung zu schaffen, die einen einfachen Aufbau aufweist.

Dies wird erreicht mit einer Wärmeübertragereinrichtung mit den Merkmalen von Anspruch 1 und einer Heizvorrichtung mit den Merkmalen von Anspruch 11.

Die Wärmeübertragereinrichtung für eine Heizvorrichtung eines Kraftfahrzeuges weist ein Gehäuse zur Aufnahme eines ein magnetisches Wechselfeld erzeugendes Element auf und mindestens ein von einem Fluid einseitig oder beidseitig umströmbares, bevorzugt metallisches Flächenheizelement, wobei an dem Gehäuse ein Fluideinlass und ein Fluidauslass angeordnet sind, wobei ein Anschlussflansch mit integriertem Fluideinlass und Fluidauslass vorgesehen ist. Das mindestens eine Flächenheizelement wird durch das magnetische Wechselfeld aufgeheizt und kann seine Wärme an das das mindestens eine Flächenheizelement umströmende Fluid abgeben. Das das magnetische Wechselfeld erzeugende Element ist bevorzugt außerhalb des Fluidkanals und der Fluidströmung durch den Fluidkanal angeordnet. Das mindestens eine und das weitere Flächenheizelement sind in einem der Fluidkanäle angeordnet. Durch den Anschlussflansch, der auch als Kühlmittelanschlussdeckel oder Kühlmittelabschlussdeckel bezeichnet wird, ist eine einfache und kompakte Wärmeübertragereinrichtung realisierbar. Der Anschlussflansch kann sowohl in einer zylindrischen Bauform der Wärmeübertragereinrichtung eingesetzt werden, wie auch in einer flächigen, insbesondere ebenen Bauform. Es ist eine geringe Anzahl von Einzelteilen ermöglicht, wodurch die Lagerhaltung für Wärmeübertragerkomponenten kostengünstiger ist. Unabhängig von kundenspezifischen Anforderungen an die Fluidanschlüsse ist ein standardisierter Anschlussflansch realisiert. Der Fluideinlass und der Fluidauslass weisen einen Anschlussstutzen auf, an den mittels unterschiedlicher Befestigungsmethoden Schlauchanschlüsse für die Fluidanschlussleitungen angebracht werden können. Derartige Befestigungsmethoden können sein: Verschraubung, Verclipsung, Vercrimpung, Verpressung und ähnliche lösbare Verbindungstechniken. Alternativ zu den Anschlussstutzen kann auch jeweils am Fluideinlass beziehungsweise am Fluidauslass ein einzelner Flansch oder ein gemeinsamer Flansch vorgesehen sein, über welchen Fluidanschlussleitungen angebunden werden können.

Bevorzugt sind Anschlussöffnungen für externe Fluidanschlussleitungen vorgesehen, die mit der Wärmeübertragereinrichtung verbindbar sind. Die Anschlussöffnungen können mit Fluideinlass- und den Fluidauslassstutzen verbunden werden. Alternativ dazu können die Fluidanschlussstutzen und/oder die Fluidanschlussleitungen einteilig mit den Anschlussöffnungen des Anschlussflansches ausgeführt sein.

Erfindungsgemäß weist der Anschlussflansch innenseitig eine Befestigungseinrichtung zur Positionierung des mindestens einen Flächenheizelementes auf. Somit ist eine Stabilisierung der Wärmeübertragereinrichtung erreicht worden. Die einzelnen Komponenten können bevorzugt an den Anschlussflansch vormontiert werden.

Weiterhin erfindungsgemäß weist der Anschlussflansch eine Führungseinrichtung für das ein magnetisches Wechselfeld erzeugende Element, insbesondere eine Induktionsspuleneinheit, auf. Somit können die Induktionsspuleneinheit und die Flächenheizelemente am Anschlussflansch positioniert und fixiert werden. Die Induktionsspuleneinheit kann zusätzlich mittels Gehäuseabschnitten des Anschlussflansches geführt werden. Hierzu sind bevorzugt Führungsstifte und/oder Führungslaschen und im Anschlussflansch angeordnete Führungsnuten, Führungsvertiefungen oder allgemein Führungsausnehmungen vorgesehen.

Bevorzugt ist der Anschlussflansch eingerichtet, einen wasser- und staubdichten Abschluss der Wärmeübertragereinrichtung zu gewährleisten. Dies kann dadurch erreicht werden, dass der Anschlussflansch einstückig aus einem Spritzgussteil gefertigt ist, in dem Standardanschlussstutzen ausgebildet sind.

Der Anschlussflansch ist bevorzugt verdrehbar. Hierdurch kann der Anschlussflansch flexibel in unterschiedlichen Einbaulagen an der Wärmeübertragereinrichtung verwendet werden. Idealerweise befinden sich die Fluidanschlüsse und damit der Anschlussflansch an derselben Seite wie die HV- und NV-Anschlüsse eines Elektronikgehäuses. Dies ermöglicht einen kompakten und einbaufreundlichen Aufbau der Wärmeübertragereinrichtung. Bevorzugt weist der Anschlussflansch eine Befestigungseinrichtung zur Befestigung des Anschlussflansches an einem Gehäuse der Wärmeübertragereinrichtung auf. Die Befestigungseinrichtung kann beispielsweise eine Aufnahmeöffnung für Schrauben, Stifte oder Ähnliches sein, in die Schrauben, Stifte oder ähnliche Befestigungsmittel bei der Montage eingreifen.

Die Wärmeübertragereinrichtung ist bevorzugt derart eingerichtet, dass das mindestens eine Flächenheizelement ein erstes Flächenheizelement ist, das innerhalb des ein elektromagnetisches Wechselfeld erzeugenden Elementes angeordnet ist, und weist mindestens ein zweites, außerhalb des ein elektromagnetisches Wechselfeld erzeugenden Elementes angeordnetes Flächenheizelement auf. So sind vier Fluidkanäle für das Fluid entstanden.

Bevorzugt ist benachbart zum zweiten Flächenheizelement ein weiteres, drittes Flächenheizelement vorgesehen. Das weitere Flächenheizelement kann zusätzlich zu dem mindestens einen Flächenheizelement einen Heizleistungsanteil, der durch das magnetische Wechselfeld erzeugt wurde aufnehmen. Besonders vorteilhaft ist die Aufteilung des vierten, äußeren Fluidkanals für das Fluid in die beiden Teilkanäle, da eine optimierte Durchströmung und Umströmung der erwärmten Flächenheizelemente ermöglicht ist. Die Wärmeübertragung an das Fluid kann dadurch optimal ausgestaltet sein, da Teilvolumenströme zur optimierten Wärmeübertragung um das zweite Flächenheizelement gebildet werden können. Bevorzugt weist das weitere Flächenheizelement Quervermischungselemente mit Öffnungen und Auswölbungen auf.

Auch ist es zu bevorzugen, wenn der Anschlussflansch eine Ringnut aufweist, welche in radialer Richtung nach außen offen ausgeführt ist und in radialer Richtung nach innen durch die Außenwandung einer Bohrung begrenzt ist. Eine Ringnut ist vorteilhaft, um die Überströmfläche vom äußeren Fluidkanal zum Fluidauslass zu vergrößern und dadurch den entstehenden Druckverlust zu reduzieren.

Weiterhin ist es zu bevorzugen, wenn eine die Ringnut in axialer Richtung begrenzende Wandung von einer Bohrung durchstoßen ist. Dies ist insbesondere vorteilhaft, um eine Fluidkommunikation zwischen der Ringnut und dem durch die Bohrung gebildeten Fluidauslass zu erzeugen.

Die Heizvorrichtung mit einer erfindungsgemäßen Wärmeübertragereinrichtung weist eine Steuereinheit zur Steuerung des ein magnetisches Wechselfeld erzeugenden Elements und der Flächenheizelemente auf, wobei in dem Gehäuse mindestens ein Fluidkanal angeordnet ist.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Figuren der Zeichnungen näher erläutert. Es zeigen:
- Fig. 1a und 1: b eine erfindungsgemäße Heizvorrichtung in montiertem Zustand,
- Fig. 2: eine erfindungsgemäße Heizvorrichtung in Explosionszeichnung,
- Fig. 3: einen Wärmeübertrager,
- Fig. 4a, 4b, 4c: einen Wärmeübertrager,
- Fig. 5a, 5b: einen Wärmeübertrager in Schnittdarstellung,
- Fig. 6a bis 6f: ein Anschlussflansch in unterschiedlichen Darstellungen,
- Fig. 7: eine perspektivische Ansicht eines Anschlussflansches, wobei der Anschlussflansch bodenseitig einen Befestigungsflansch zur Anbindung von Anschlussleitungen und/oder Anschlussstutzen aufweist,
- Fig. 8: eine alternative perspektivische Ansicht des Anschlussflansches gemäß Figur 7, wobei der Anschlussflansch eine in radialer Richtung nach außen geöffnete Ringnut aufweist,
- Fig. 9: eine Ansicht eines alternativ ausgestalteten Anschlussflansches, wobei der Anschlussflansch einteilig mit dem Anschlussflansch ausgebildete Anschlussstutzen aufweist,
- Fig. 10: eine alternative perspektivische Ansicht auf die Oberseite des Anschlussflansches gemäß Figur 9,
- Fig. 11 bis 13: jeweils eine perspektivische Ansicht einer Wärmeübertragereinrichtung mit einem am unteren Endbereich angebunden Anschlussflansch gemäß den Figuren 7 und 8, und
- Fig. 14 und 15: jeweils eine Schnittansicht der Wärmeübertragereinrichtung gemäß den Figuren 11 bis 13, wobei insbesondere ein mögliches Durchströmungsprinzip dargestellt ist.

### Bevorzugte Ausführung der Erfindung

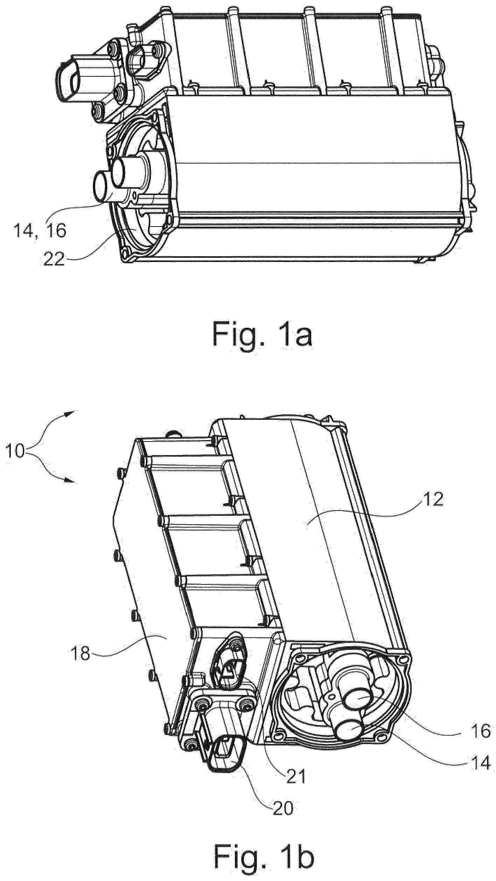

Figur 1a zeigt ein erstes Ausführungsbeispiel einer erfindungsgemäßen Heizvorrichtung 10 mit einer Wärmeübertragereinrichtung 12 mit einem Fluideinlass 14 und einem Fluidauslass 16 und einer Steuerungseinrichtung 18 in perspektivischer Darstellung aus einer Blickrichtung von der Seite. Der Fluideinlass 14 und der Fluidauslass 16 sind an einem Anschlussflansch 22 angeordnet. Die Steuerungseinrichtung 18 weist einen HV- (Hochspannungs) Stecker 20 und einen NV- (Niederspannungs) Stecker 21 auf. Figur 1b zeigt die Heizvorrichtung 10 von Figur 1a in einer um 90° gedrehten Darstellung mit denselben Komponenten.

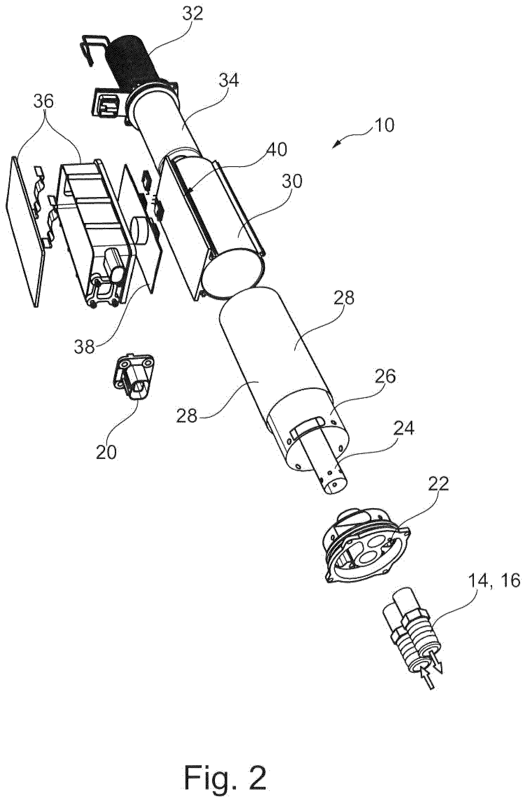

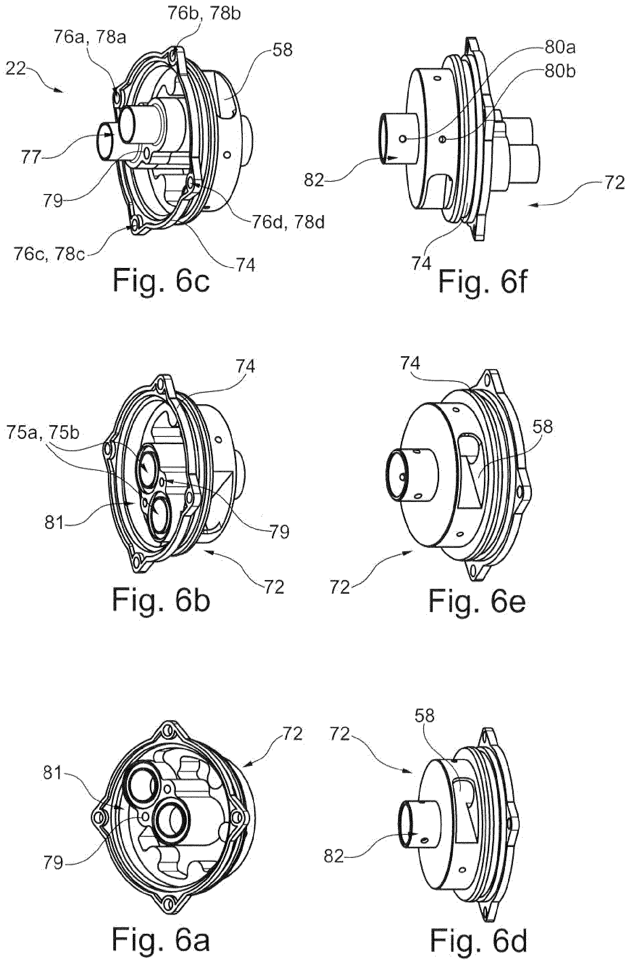

Figur 2 zeigt die Heizvorrichtung 10 in Explosionsdarstellung. Identische Teile werden mit denselben Bezugszeichen versehen. Die Wärmeübertragereinrichtung 12 weist den Fluideinlass 14 und den Fluidauslass 16 auf, die an und zumindest abschnittsweise in dem Anschlussflansch 22 angeordnet sind. Der Anschlussflansch 22 wird auch als Kühlmittelanschlussdeckel 22 bezeichnet. Der Abschussflansch 22 wird in der Beschreibung zu Figur 6 detaillierter beschrieben. An dem Anschlussflansch 22 angeordnet ist die eigentliche Wärmeübertragereinheit 12 mit einem ersten, inneren Flächenheizelement 24 angeordnet und in montiertem Zustand mit diesem lösbar verbunden.

Das erste Flächenheizelement 24 ist rohrförmig, bevorzugt als metallisches Rohr, besonders bevorzugt als Edelstahlrohr ausgebildet. Um das erste Flächenheizelement 24 sind ein zweites Flächenheizelement 26 und ein drittes Flächenheizelement 28 angeordnet. In dieser Darstellung in Figur 2 ist das dritte Flächenheizelement als glattes Blech dargestellt, aber bevorzugt weist das dritte Flächenheizelement 28 Schlitze und/oder Auswölbungen und/oder Wellungen auf, die Strömungspfade durch das dritte Flächenheizelement 28 ermöglichen.

Die Flächenheizelemente 24, 26 und 28 sind in einem Gehäuse 30 aufgenommen. Das Gehäuse 30 ist bevorzugt ein Aluminiumgehäuse, bevorzugt ein extrudierter Aluminiumzylinder. Das Gehäuse 30 ist bevorzugt ein zylindrisches Gehäuse 30. In dem Gehäuse 30 ist ferner ein ein magnetisches Wechselfeld erzeugendes Element 32 angeordnet. Das ein magnetisches Wechselfeld erzeugende Element 32 ist bevorzugt eine Induktionsspule 32, besonders bevorzugt eine hohlzylindrische Induktionsspule 32. Das ein magnetisches Wechselfeld erzeugende Element 32 ist in einem Elementgehäuse 34, bevorzugt einem Spulengehäuse 34, aufgenommen.

An dem Gehäuse 30 benachbart ist die Steuerungseinrichtung 18 angeordnet, die eine in einem Elektronikgehäuse 36 aufgenommene Hochspannungsleistungselektronik 38 aufweist. Das Elektronikgehäuse 36 ist bevorzugt aus Aluminium hergestellt. Bevorzugt ist das Elektronikgehäuse 36 seitlich am Gehäuse 30 angebunden und an oder auf einer Anbindungsplatte 40 angeordnet.

Die Gehäuse 30 und 36 sind bevorzugt mechanisch verbunden, sodass die Heizvorrichtung 10 als eine Vorrichtung beispielsweise in ein Kraftfahrzeug eingebaut werden kann.

Die Flächenheizelemente 24, 26 und 28 sind bevorzugt als hohlzylindrische oder flächige Elemente und aus einem Metall ausgebildet. Bevorzugt sind die Flächenheizelemente 24, 26, 28 als dünne Bleche mit einer Wandstärke ausgeführt, die in etwa in einem Bereich zwischen etwa 0.08 mm und 0.5 mm liegt. Das erste Flächenheizelement 24 ist bevorzugt aus einem ferritischen Material hergestellt und kann ca. zwischen 20% und 40% der Heizleistung aus dem magnetischen Wechselfeld aufnehmen. Das zweite Flächenheizelement 26 ist bevorzugt aus einem austenitischen Material hergestellt und kann ca. 50% bis 70 % der Heizleistung aufnehmen. Das dritte Flächenheizelement 28 ist aus einem ferritischen Material hergestellt und kann ca. 5 % bis 15 % der Heizleistung aufnehmen. Die Materialien aus denen die Flächenheizelemente 24, 26, 28 hergestellt sind, weisen alle einen spezifischen elektrischen Widerstand auf, der deutlich größer ist als der der Induktionsspule, die aus einem Kupfer, insbesondere aus einem HF-Kupfer (Hochfrequenzkupfer) gefertigt ist.

Durch die geringe Dicke der Flächenheizelemente ist es möglich, dass die Durchdringung von mehr als einem Flächenheizelement gegeben ist, wobei die Eindringtiefe des elektromagnetischen Wechselfeldes auf Grund des Skin-Effekts höher ist als die Dicke des jeweiligen Flächenheizelementes. Somit ist die Hintereinanderschaltung des zweiten und des dritten Flächenheizelementes 26 und 28 ermöglicht.

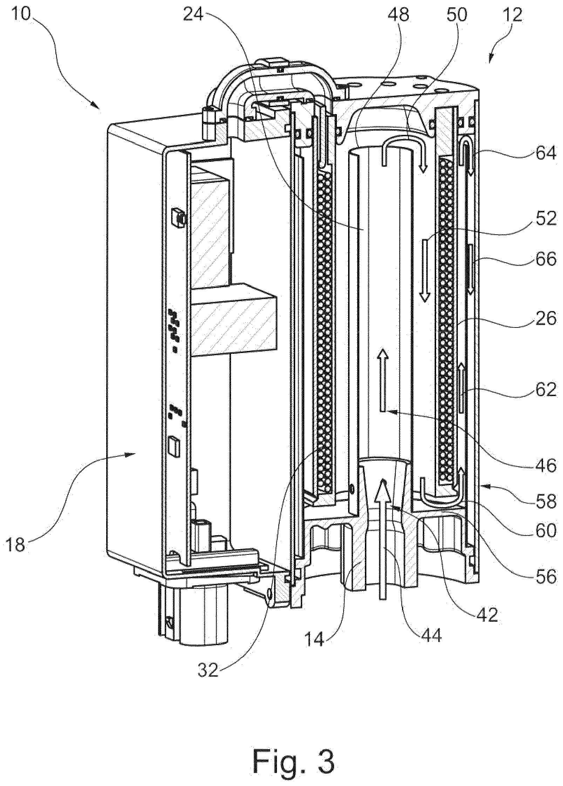

Figur 3 zeigt die Heizvorrichtung 10 in einer Schnittdarstellung. Die Heizvorrichtung 10 wird auch als Induktionsheizer 10 bezeichnet. In Figur 3 sind neben den Komponenten der Heizvorrichtung 10 auch Strömungswege für ein durch die Wärmeübertragereinrichtung 12 strömendes Fluid dargestellt. Das Fluid strömt durch den Fluid- oder Kühlmitteleinlass 14, insbesondere dessen Eintrittsflansch 22 in das Innere der Wärmeübertragereinrichtung 12 ein.

Die Strömungsrichtung des Fluids ist mit einem Pfeil 44 bezeichnet und wird als Eintrittsströmungsrichtung 44 bezeichnet. Das Fluid strömt durch einen durch das erste Flächenheizelement 24 gebildeten ersten Fluidkanal 46. An einem Fluidkanalende 48 wird die geradlinige Strömungsrichtung 46 umgelenkt und bildet eine Umlenkströmung, die mit einem Pfeil 50 bezeichnet ist. Das Fluid kann im Wesentlichen parallel, aber mit entgegengesetzter Richtung, dargestellt durch einen Pfeil 52, entlang der Außenwand des ersten Flächenheizelementes 24 entlangströmen, bis das Fluid das andere Ende 54 des ersten Flächenheizelementes 24 erreicht hat.

Das Ende 54 ist mit dem Anschlussflansch 42 derart verbunden, dass kein Fluid wieder in das Innere des ersten Flächenheizelementes 24 eintreten kann. Dadurch und durch eine Wand 56 ist der zweite Fluidkanal 52 in Strömungsrichtung 52 gesehen abgeschlossen. Zwischen der Wand 56 und der radial um das erste Flächenheizelement 24 angeordneten Induktionsspule 32 ist ein Durchlass 58 gebildet, durch den das Fluid in einen mit dem Pfeil 60 dargestellten Strömungspfad 60 umlenkt wird und in den dritten Fluidkanal 62 eintritt. Der dritte Fluidkanal 62 wird auf der einen Seite durch den abgedichteten (elektrisch und mechanisch) Induktionsspulenkörper 34 und auf der anderen Seite durch das zweite Flächenheizelement 26 gebildet.

Am Ende des dritten Fluidkanals 62 wird das Fluid abermals umgelenkt, dargestellt durch den Pfeil 64, in einen vierten Fluidkanal 66, wobei die Strömungsrichtung des Fluids in Richtung des neben dem Fluideinlasses 14 angeordneten Fluidauslass 16, welcher in Figur 3 nicht dargestellt ist, zeigt.

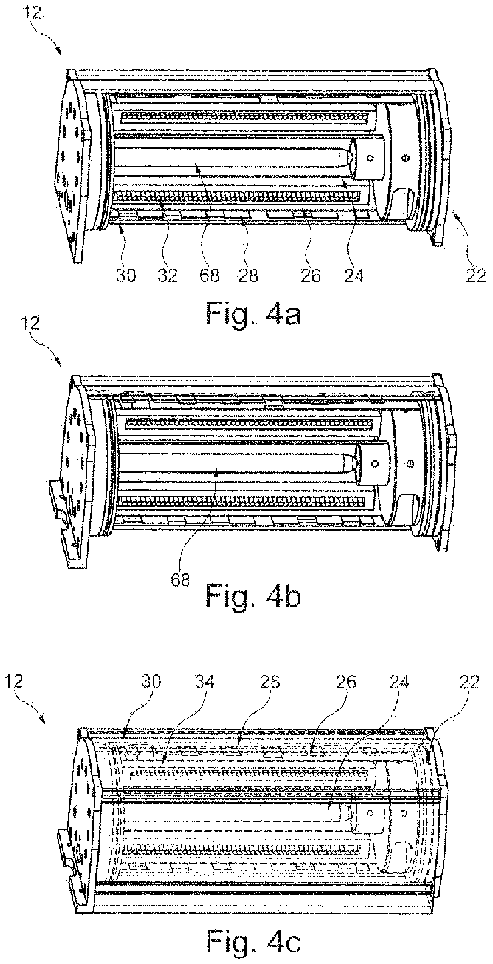

Figur 4a zeigt die Wärmeübertragereinrichtung 12 mit dem Gehäuse 30, dem Spulengehäuse 34, dem ersten Flächenheizelement 24, dem zweiten Flächenheizelement 26 und dem dritten Flächenheizelement 28 sowie dem Kühlmittelabschlussdeckel 22. Die Induktionsspule 32 selbst ist nicht zu erkennen.

Figur 4b zeigt die Wärmeübertragereinrichtung 12 mit denselben Komponenten, wobei durch die andere Schnittebene ein Innendorn 68 erkennbar ist.

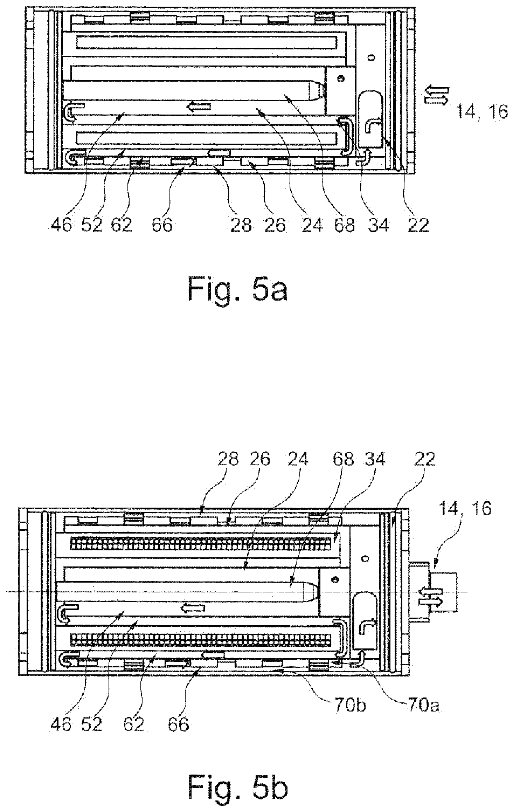

Figur 4c zeigt ebenfalls die Wärmeübertragereinrichtung 12 mit dem Gehäuse 30, dem Spulengehäuse 34 und der Induktionsspule 32, dem Innendorn 68, der zentrisch zur Induktionsspule 42 angeordnet ist. Die Flächenheizelemente 24, 26 und 28 sind ebenfalls rotationssymmetrisch um den Innendorn 68 angeordnet. Das erste Flächenheizelement 24 ist innerhalb der Spule 32 angeordnet, das zweite Flächenheizelement 26 ist außerhalb der Induktionsspule 32 angeordnet und das dritte Flächenheizelement 28 ist im vierten Fluidkanal 66 angeordnet und teilt den Fluidkanal 66 in einen ersten Teilkanal 70a oder Teilkanal 70a und einen zweiten Teilkanal 70b oder Teilkanal 70b auf. Diese Aufteilung der Fluidkanäle 46, 52, 66, 70a, 70b ist deutlicher in Figur 5 erkennbar.

Das dritte Flächenheizelement 28 kann als hohlzylindrischer Blechkörper mit einem Zylindermantel ausgebildet sein. Das dritte Flächenheizelement 28 weist an dem Zylindermantel angeordnete Öffnungen auf, die als Schlitze ausgebildet sein können. Die Öffnungen können auch realisiert sein, indem am Zylindermantel beidseitige Auswölbungen ausgebildet sind. Die Auswölbungen sind gebildet, indem über den Umfang des Zylindermantels erstreckende Zylindermantelabschnitte gebildet werden, die ein Zylindermantelband bilden. Das Zylindermantelband ist abwechselnd auf die innere Seite des Zylindermantels und auf die äußere Seite des Zylindermantels ausgestülpt oder ausgewölbt. Somit wird ein Fluidkanal oder Strömungspfad zwischen einem geradlinig verlaufenden Zylindermantelabschnitt und einem ausgestülpten oder ausgewölbten Zylindermantelabschnitt gebildet. Die Zylindermantelbänder sind in etwa 0.1 mm bis 10 mm hoch. Die Öffnungen können ebenfalls durch Schlitze oder anders gestaltete Öffnungen gestaltet sein. Wobei Berippungen oder Wellungen die Auswölbungen in die Funktion als Abstandshalter zum zweiten Flächenheizelement 26 übernehmen.

Die Ausgestaltung des Flächenheizelementes 28 kann auch als flächiges Blech vorliegen, wobei sich die Abschnitte mit Auswölbungen nicht über den Zylindermantel erstrecken sondern flächige Bänder bilden, die abwechselnd mit geradlinigen Abschnitten oder Bändern angeordnet sind.

Figuren 5a und 5b zeigen die Wärmeübertragereinrichtung 12 ebenfalls in Schnittdarstellung. Zusätzlich zu dem in den vorhergehenden Figuren gezeigten Aufbau der Wärmeübertragereinrichtung 12 ist erkennbar, wie der Fluideinlass 14 und der Fluidauslass 16 angeordnet und ausgestaltet sind. Der Fluideinlass14 ist innerhalb des Fluidauslass 16 angeordnet, sodass das Fluid zentrisch in den ersten Fluidkanal 46 strömen kann und durch den rotationssysmmetrisch um den Einlassflansch 14 angeordneten Fluidauslass 16 im Anschlussflansch 22 aus der Wärmeübertragereinrichtung 12 ausströmen kann.

Die Ausführungsform des Anschlussflansches 22 der Wärmeübertragereinrichtung 12 in den Figuren 5a und 5b ist von der in Figur 1 gezeigten Ausführungsform verschieden. Der Anschlussflansch 22 von Figur 1 weist nebeneinander angeordnete Fluidein- und Fluidauslässe 14 und 16 auf. Somit sind zwei realisierte Ausführungsformen für den Fluideinlass 14 und den Fluidauslass 16, insbesondere zwei Ausführungsformen für den Anschlussflansch 22, gezeigt.

Figur 6 zeigt in verschiedenen Darstellungsformen den Anschlussflansch 22. Die Figuren 6a, 6b und 6c zeigen den Anschlussflansch 22 in perspektivischer Ansicht von schräg oben, wobei die nach außen, also von der Wärmeübertragereinrichtung 12 weggewandte Seite gezeigt ist. Die Figuren 6d, 6e und 6f zeigen den Anschlussflansch 22 ebenfalls in perspektivischer Darstellung von schräg oben und aus seitlicher Perspektive (6f), wobei die innere Seite des Anschlussflansches 22 nach oben zeigt. Somit sind die Darstellungen 6a, 6b und 6c um 180° verdreht zu den Darstellungen der Figuren 6d, 6e und 6f gezeigt, bezogen auf den Anschlussflansch 22.

Der Anschlussflansch 22 weist ein zylindrisches Gehäuse 72 auf. Das Gehäuse 72 ist einstückig aufgebaut, bevorzugt als Spritzgußteil und weist einen ringförmigen Abschnitt 74 auf, an dem Befestigungseinrichtungen 76a, 76b, 76c, 76d angeordnet sind, mittels derer der Anschlussflansch 22 an dem Gehäuse 30 befestigt werden kann. Die Befestigungseinrichtungen 76a bis 76d sind in der gezeigten Ausführungsform Öffnungen 78a, 78b, 78c, 78d. Der Anschlussflansch 22 weist ferner Durchlassöffnungen 58 auf, die eine Umlenkung des Strömungsweges des Fluids von dem Fluidkanal 62 in den Fluidkanal 66 erlauben.

Der Anschlussflansch 22 weist Anschlussöffnungen 75a und 75b für den Fluideinlass 14 und den Fluidauslass 16 auf. An die Anschlussöffnungen 75a und 75b ist bevorzugt ein Anschlussstutzen 77 für den Fluideinlass 14 und den Fluidauslass 16 vorgesehen. Der Anschlussstutzen 77 kann mit Befestigungsmitteln 79 mit einem Gehäuseabschnitt 81 des Gehäuses 72 verbunden werden. In der gezeigten Form sind der Fluideinlass 14 und der Fluidauslass 16 nebeneinander angeordnet. Es kann aber auch in einer weiteren Ausführungsform möglich sein den Auslassanschlussstutzen 77 ringförmig auszugestalten, sodass dieser konzentrisch angeordnete Öffnungen 75a und 75b aufweist, um den Fluideinlass 14 und den Fluidauslass 16 anzuschließen.

Die Figuren 6d, 6e und 6f zeigen eine Befestigungseinrichtung 80a und 80b für die Flächenheizelemente 24 und 26 beziehungsweise 28. Die Befestigungseinrichtung 80a und 80b kann gleichzeitig als Führungseinrichtung 82 für einen Körper (nicht dargestellt) der Induktionsspule 32 dienen. Seitlich sind Dichtungsmittel 84 zur staub- und wasserdichten Abdichtung des Anschlussflansches 22 vorgesehen, die mit dem Gehäuse 30 der Wärmeübertragereinrichtung 12 in Eingriff treten können, wenn der Anschlussflansch 22 an das Gehäuse 30 montiert wird. Diese Dichtungsmittel können Aufnahmenuten für O-Ringe oder andere Dichtungsmittel aufweisen.

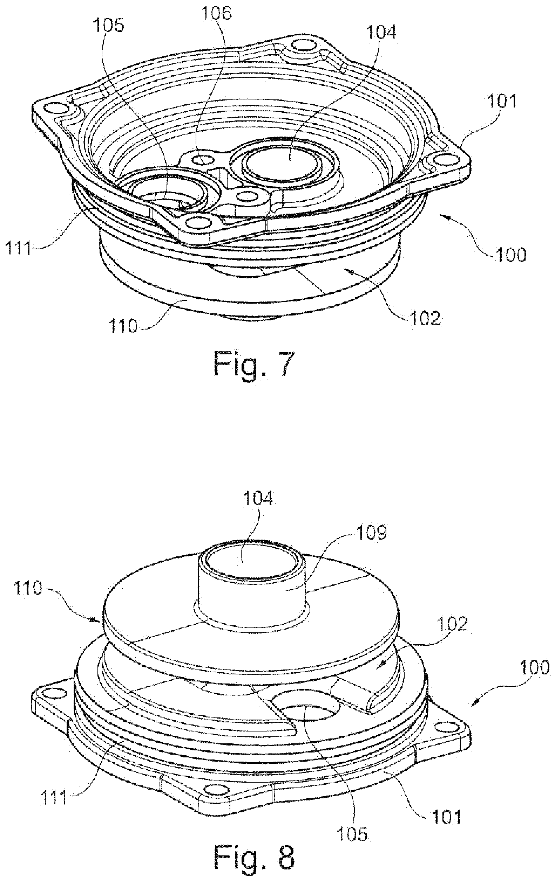

Figur 7 zeigt eine perspektivische Ansicht eines Anschlussflansches 100. Der Anschlussflansch 100 ist ähnlich dem Anschlussflansch 22 der vorausgegangenen Figuren ausgebildet. Der umlaufende Rand 101 weist vier in Umfangsrichtung verteilte Bohrungen auf, über welche der Anschlussflansch 100 an weitere Elemente der Heizvorrichtung angebunden werden kann.

Der Blick des Betrachters ist in Figur 7 auf die Unterseite des Anschlussflansches 100 gerichtet. Mit dem Bezugszeichen 104 ist eine Bohrung dargestellt, welche als Fluideinlass für die Wärmeübertragereinrichtung dient. In Figur 7 ist die Bohrung 104 in radialer Richtung versetzt zur Mittelachse angeordnet. Die Bohrung kann in alternativen Ausgestaltungen auch konzentrisch zur Mittelachse des Anschlussflansches angeordnet sein. Neben der Bohrung 104 ist die Bohrung 105 angeordnet, welche als Fluidauslass dient. Die Bohrungen 104, 105 weisen einen in axialer Richtung abragenden und in Umfangsrichtung vollständig umlaufenden Kragen auf, welcher einen ringförmigen Aufnahmebereich für ein Dichtungsmittel aufweist. Die Kragen sind über einen flächigen Steg miteinander verbunden und bilden den Befestigungsflansch 106 aus. An den Befestigungsflansch 106 können Rohrleitungen oder Stutzen angebunden werden, welche als Zu- und Ableitung für ein Fluid dienen.

Weiterhin weist der Anschlussflansch 100 eine vollständig umlaufende Ringnut 102 auf. Diese dient der Ableitung des Fluids aus dem Inneren der Wärmeübertragereinrichtung. Die Ringnut steht hierzu mit der Bohrung 105 in Fluidkommunikation.

Die Figur 8 zeigt eine perspektivische Ansicht der Oberseite des Anschlussflansches 100. Der Anschlussflansch 100 ist in drei Abschnitte 109, 110 und 111 unterteilt. Der obere Abschnitt 109 weist den geringsten Durchmesser auf und bildet die Wandung der zentralen Bohrung 104 aus. Der Abschnitt 109 dient gleichzeitig als Anbindungsfläche für das innere Flächenheizelement. Nach unten schließt sich der Abschnitt 110 an, welcher einen wesentlich größeren Durchmesser als der Abschnitt 109 aufweist. Im Abschnitt 110 ist die Ringnut 102 ausgebildet, welche in radialer Richtung nach innen zum Zentrum durch die Außenwandung der Bohrung 104 begrenzt ist. Der Abschnitt 110 bildet weiterhin die Anbindungsfläche für das mittlere Flächenheizelement. Unterhalb des Abschnitts 110 ist der Abschnitt 111 angeordnet, welcher seinerseits einen größeren Durchmesser als Abschnitt 110 aufweist. Der Abschnitt 111 dient als Anbindungsfläche für das Gehäuse, welches die Wärmeübertragereinrichtung in radialer Richtung abschließt.

In Figur 8 ist zu erkennen, wie die Ringnut 102 mit der Bohrung 105 in Fluidkommunikation steht. Die Bohrung 105 mündet in die Ringnut 102, wodurch ein Fluid aus der Bohrung 105 in die Ringnut 102 strömen kann und umgekehrt. Bevorzugt bildet die Bohrung 105 den Fluidauslass der Wärmeübertragereinrichtung.

Die Bohrung 104 beginnt am unteren Endbereich, wie in Figur 7 ersichtlich, mit einem radialen Versatz zur Mittelachse und endet am oberen Endbereich des Anschlussflansches 100 konzentrisch zur Mittelachse des Anschlussflansches 100. Dies bedingt, dass die Bohrung 104 innerhalb des Anschlussflansches 100 den Versatz ausgleicht, was beispielsweise durch eine schräge Orientierung der Bohrung 104 oder eine bogenförmige Gestaltung der Bohrung 104 erreicht werden kann.

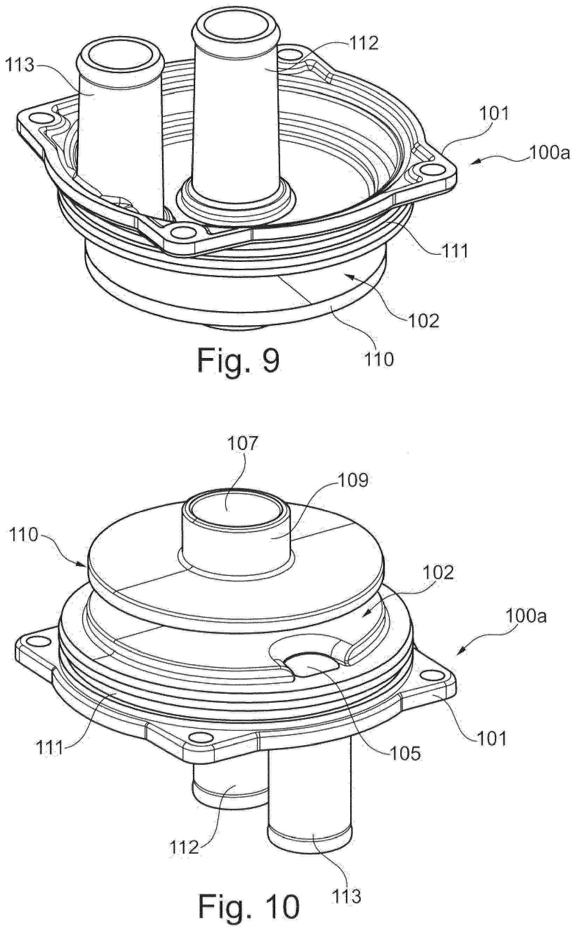

Figur 9 zeigt eine alternative Ausgestaltung des Anschlussflansches 100a. An der Unterseite des Anschlussflansches 100a ist kein Befestigungsflansch angeordnet. Die stutzenförmigen Fortsätze 112, 113 sind einteilig mit dem Anschlussflansch 100a ausgebildet und bilden eine Verlängerung der Bohrungen 107 und 105, welche in der nachfolgenden Figur 10 dargestellt sind. Die stutzenförmigen Fortsätze 112, 113 weisen an ihren freien Endbereichen jeweils einen in Umfangsrichtung umlaufenden Wulst auf, welcher als Sicherungselement für eine aufgesteckte Anschlussleitung dienen kann. Die stutzenförmigen Fortsätze 112, 113 weisen weiterhin an ihrem Fußbereich einen stufenförmig ausgebildeten Rand auf, welcher in Umfangsrichtung vollständig umläuft. Dieser Rand erhöht die Stabilität der stutzenförmigen Fortsätze 112, 113.

Die übrigen Elemente weisen die gleichen Bezugszeichen auf wie die Figuren 8 und 9, sofern sie übereinstimmen.

Figur 10 zeigt eine Aufsicht auf den Anschlussflansch 100a gemäß Figur 9.

Die Anschlussflansche 100, 100a der Figuren 7 bis 10 sind insbesondere gegenüber dem Anschlussflansch 22, wie er in den Figuren 6a bis 6f gezeigt ist, dahingehend verändert, dass sie eine umlaufende Ringnut 102 anstelle eines einzigen Durchlasses 58 aufweisen. Dies senkt den entstehenden Druckverlust innerhalb der Wärmeübertragereinrichtung und wirkt der Stauung von dem Fluid entgegen. Der Übertritt des Fluids erfolgt aus dem in radialer Richtung äußeren Fluidkanal in die Ringnut hinein. Der äußere Fluidkanal kann von dem äußeren Flächenheizelement in Teilkanäle unterteilt sein.

Durch die Ringnut 102 kann das Fluid entlang des gesamten Umfangs aus dem äußeren Fluidkanal ausströmen. Dadurch wird insbesondere die starke Verwirbelung, welche aufgrund einer räumlich begrenzten Übertrittsmöglichkeit entstehen kann, abgemildert oder gänzlich verhindert.

Die Bohrung 107 ist konzentrisch zur Mittelachse des Anschlussflansches 100a ausgebildet und bildet eine geradlinige Durchgangsbohrung, deren Mittelachse identisch ist mit der Mittelachse des Anschlussflansches 100a. Der stutzenförmige Fortsatz 112 ist in direkter Verlängerung der Bohrung 107 ausgebildet.

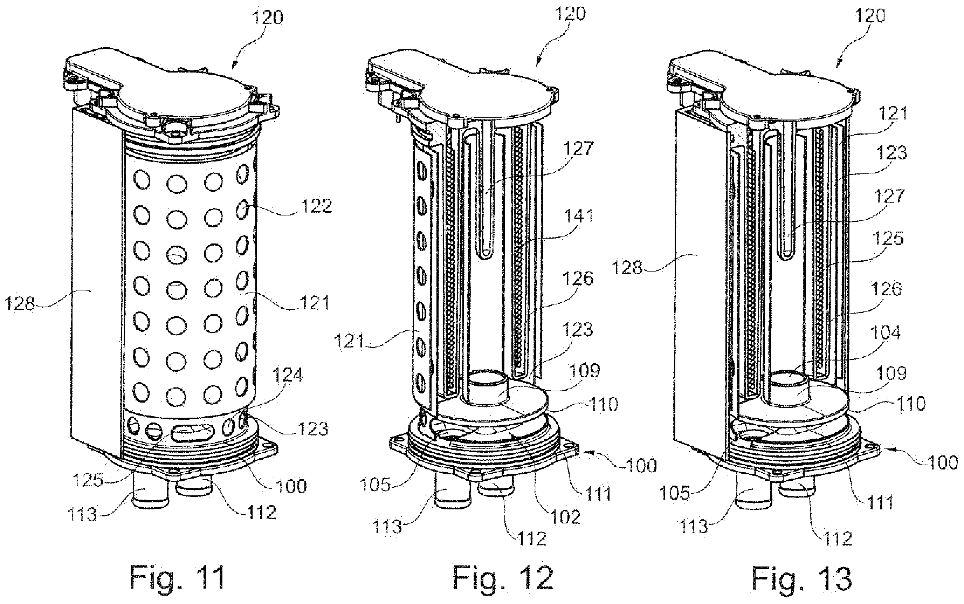

Die Figuren 11, 12 und 13 zeigen jeweils eine perspektivische Ansicht der Wärmeübertragereinrichtung 120, an welche im unteren Bereich der Anschlussflansch 100 angebunden ist. Identische Elemente sind mit den gleichen Bezugszeichen versehen.

In der Darstellung der Figur 11 ist das äußere Flächenheizelement 121 gezeigt, welches eine Mehrzahl von Öffnungen 122 aufweist, durch welche das Fluid zwischen den beiden vom Flächenheizelement 121 ausgebildeten Teilkanälen hin- und herströmen kann.

Das äußere Flächenheizelement 121 ist mit dem mittleren Flächenheizelement 123 stoffschlüssig und/oder formschlüssig verbunden, daher sitzt es nicht auf dem Anschlussflansch 100 auf. Das radial innerhalb des Flächenheizelementes 121 angeordnete Flächenheizelement 123 ist am mittleren Abschnitt 110 des Anschlussflansches 100 angebunden und umschließt die Ringnut 102 vollständig. Das Flächenheizelement 123 weist an seinem unteren Endbereich runde Öffnungen 124 und langlochartige Öffnungen 125 auf. Diese Öffnungen 124, 125 sind insbesondere auf Höhe der Ringnut 102 in einer horizontalen Reihe angeordnet und ermöglichen den Fluidübertritt aus dem äußeren Fluidkanal beziehungsweise den Teilkanälen in die Ringnut 102.

In einer alternativen Ausgestaltung kann das mittlere Flächenheizelement verkürzt ausgeführt sein, so dass die Ringnut in radialer Richtung nicht von dem Flächenheizelement überdeckt wird. Dadurch kann der entstehende Druckabfall weiter reduziert werden, da die Überströmfläche für das Fluid in die Ringnut weiter vergrößert wird.

Figur 12 zeigt eine weitere Schnittansicht der Wärmeübertragereinrichtung 120. Der Schnitt verläuft in der Figur 12 in einer Ebene, welche die Mittelachse der Wärmeübertragereinrichtung 120 schneidet.

In Figur 12 ist insbesondere die Anbindung des inneren Flächenheizelementes an den oberen Abschnitt 109 des Anschlusselementes 100 zu erkennen. Im durch das innere Flächenheizelement ausgebildeten Fluidkanal ist ein Innendorn 127 angeordnet. Radial außerhalb des inneren Flächenheizelementes und dem Spulengehäuse 126 ist ein Fluidkanal ausgebildet. Im Spulengehäuse 126 ist ein Induktionsspulenkörper 141 aufgenommen. Zwischen dem Spulengehäuse 126 und dem mittleren Flächenheizelement 123 ist ein weiterer Fluidkanal ausgebildet und zwischen dem mittleren Flächenheizelement 123 und dem äußeren Flächenheizelement 121 ist ein weiterer Fluidkanal ausgebildet.

Figur 13 zeigt eine weitere Schnittansicht der Wärmeübertragereinrichtung 120. Zusätzlich zur Figur 12 ist das Gehäuse 128 dargestellt, welches die Wärmeübertragereinrichtung in radialer Richtung nach außen abschließt. Das Gehäuse 128 umfasst den unteren Abschnitt 111 des Anschlussflansches 100, wodurch das Gehäuse 128 in axialer Richtung nach unten durch den Anschlussflansch 100 abgeschlossen ist.

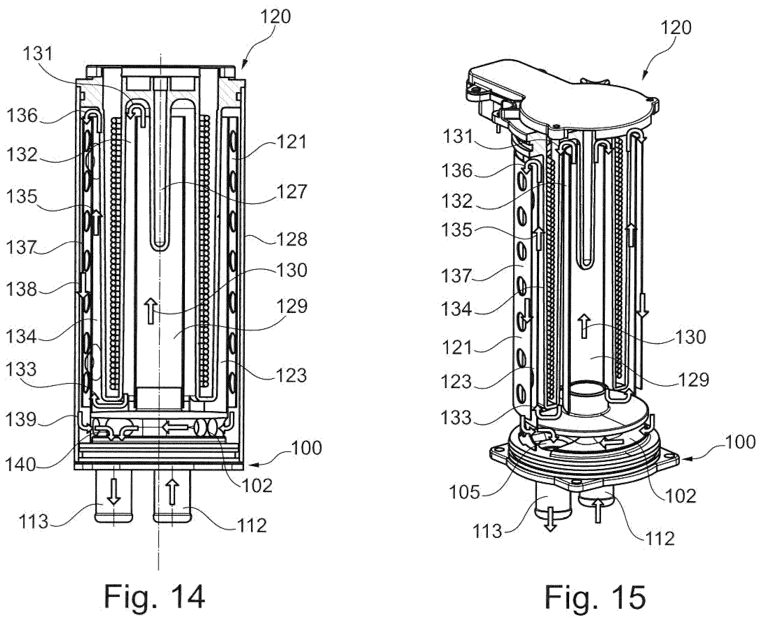

Figur 14 zeigt eine Ansicht der Wärmeübertragereinrichtung 120, wobei insbesondere die Durchströmung der Wärmeübertragereinrichtung 120 gezeigt ist. Der Aufbau der Wärmeübertragereinrichtung 120 der Figuren 14 und 15 stimmt mit den vorausgegangenen Figuren 11 bis 13 überein. Identisch Elemente sind mit den gleichen Bezugszeichen versehen.

Ein Fluid kann durch den stutzenförmigen Fortsatz 112 in den zentralen konzentrisch angeordneten Fluidkanal 129 einströmen und entlang des Richtungspfeils 130 nach oben strömen. Dort wird das Fluid entlang des Richtungspfeils 131 um 180° umgelenkt und strömt im Fluidkanal 132, welcher zwischen dem inneren Flächenheizelement und der radial nach innen gerichteten Wandung des Spulengehäuses 126 ausgebildet ist nach unten. Dort wird das Fluid um 180° entlang des Richtungspfeils 133 umgelenkt und strömt in zwischen der radial nach außen gerichteten Wandung des Spulengehäuses 126 und dem mittleren Flächenheizelement 123 ausgebildeten Fluidkanal 134 entlang des Richtungspfeils 135 nach oben. Dort wird das Fluid erneut um 180° entlang des Richtungspfeils 136 umgelenkt und strömt im Fluidkanal 137 entlang des Richtungspfeils 138 nach unten. Der Fluidkanal 137 ist zwischen dem Gehäuse 128 und dem mittleren Flächenheizelement 123 ausgebildet. Das äußere Flächenheizelement 121 ist in dem Fluidkanal 137 angeordnet und unterteilt diesen in zwei Teilkanäle. Das Fluid wird schließlich am unteren Bereich entlang des Richtungspfeils 139 in die Ringnut 102 umgelenkt und strömt nach einer Umlenkung entlang des Richtungspfeils 140 nach unten hin durch den stutzenförmigen Fortsatz 113 aus.

Figur 15 zeigt eine perspektivische Ansicht der Wärmeübertragereinrichtung 120 der Figur 14. In Figur 15 ist insbesondere das Überströmen des Fluids aus dem äußeren Fluidkanal beziehungsweise den Teilkanälen in die Ringnut 102 zu erkennen.

Die in den vorausgegangenen Figuren 7 bis 15 gezeigten Anschlussflansche 100, 100a sowie der in den Figuren 6a bis 6f gezeigte Anschlussflansch 22 sind vorzugsweise als Aluminium-Druckgussbauteil ausgebildet.

Gemäß der vorliegenden Unterlagen ist eine Wärmeübertragereinrichtung synonym mit einer Wärmetauschereinrichtung. Gleiches gilt für die Begriffe Strömungskanal und Fluidkanal, sowie Teilströmungskanal und Teilkanal.

## Patentansprüche

1. Wärmeübertragereinrichtung (12, 120) für eine Heizvorrichtung (10) eines Kraftfahrzeuges, aufweisend ein Gehäuse (30, 128) zur Aufnahme eines ein magnetisches Wechselfeld erzeugendes Elementes (32, 141), mit einem ein magnetisches Wechselfeld erzeugendes Element, und mindestens ein von einem Fluid einseitig oder beidseitig umströmbares, bevorzugt metallisches Flächenheizelement (24, 26, 28, 121, 123), wobei an dem Gehäuse (30, 128) ein Fluideinlass (14) und ein Fluidauslass (16) angeordnet sind, wobei ein Anschlussflansch (22) mit integriertem Fluideinlass (14) und Fluidauslass (16) vorgesehen ist, wobei der Anschlussflansch (22) innenseitig eine Befestigungseinrichtung (80a, 80b) zur Positionierung des mindestens einen Flächenheizelementes (24, 26, 28) aufweist, 28),
**dadurch gekennzeichnet, dass** der Anschlussflansch (22, 100, 100a) eine Führungseinrichtung (82, 109) für das ein magnetisches Wechselfeld erzeugende Element (32, 141), insbesondere eine Induktionsspuleneinheit, (32, 34, 141) aufweist.

2. Wärmeübertragereinrichtung (12, 120) nach Anspruch 1, **dadurch gekennzeichnet, dass** Anschlussöffnungen (75a, 75b) für externe Fluidanschlussleitungen vorgesehen sind, die mit der Wärmeübertragereinrichtung (12, 120) verbindbar sind.

3. Wärmeübertragereinrichtung (12, 120) nach Anspruch 2, **dadurch gekennzeichnet, dass** Fluidanschlussstutzen (77, 112, 113) und/oder die Fluidanschlussleitungen einteilig mit den Anschlussöffnungen (75a, 75b) des Anschlussflansches (22, 100, 100a) ausgeführt sind.

4. Wärmeübertragereinrichtung (12, 120) nach einem der vorhergehenden Ansprüche, **dadurch gekennzeichnet, dass** der Anschlussflansch (22, 100, 100a) eingerichtet ist, einen wasser- und staubdichten Abschluss der Wärmeübertragereinrichtung (12, 120) zu gewährleisten.

5. Wärmeübertragereinrichtung (12, 120) nach einem der vorhergehenden Ansprüche, **dadurch gekennzeichnet, dass** der Anschlussflansch (22, 100, 100a) verdrehbar ist.

6. Wärmeübertragereinrichtung (12, 120) nach einem der vorhergehenden Ansprüche, **dadurch gekennzeichnet, dass** der Anschlussflansch (22, 100, 100a) eine Befestigungseinrichtung (76a, 76b, 76c, 76d, 78a, 78b, 78c, 78d) zur Befestigung des Anschlussflansches (22, 100, 100a) an dem Gehäuse (30, 129) der Wärmeübertragereinrichtung (12, 120) aufweist.

7. Wärmeübertragereinrichtung (12, 120) nach einem der vorhergehenden Ansprüche, **dadurch gekennzeichnet, dass** das mindestens eine Flächenheizelement (24, 26, 28, 121, 123) ein erstes Flächenheizelement (24) ist, das innerhalb des ein elektromagnetisches Wechselfeld erzeugenden Elementes (32, 141) angeordnet ist, und mindestens ein zweites, außerhalb des ein elektromagnetisches Wechselfeld erzeugenden Elementes (32, 141) angeordnetes Flächenheizelement (26, 123) vorgesehen ist.

8. Wärmeübertragereinrichtung (12, 120) nach Anspruch 7, **dadurch gekennzeichnet, dass** benachbart zum zweiten Flächenheizelement (26, 123) ein weiteres, drittes Flächenheizelement (28, 121) vorgesehen ist.

9. Wärmeübertragereinrichtung (120) nach einem der vorhergehenden Ansprüche, **dadurch gekennzeichnet, dass** der Anschlussflansch (100, 100a) eine Ringnut (102) aufweist, welche in radialer Richtung nach außen offen ausgeführt ist und in radialer Richtung nach innen durch die Außenwandung einer Bohrung (105, 107) begrenzt ist.

10. Wärmeübertragereinrichtung (120) nach Anspruch 9, **dadurch gekennzeichnet, dass** eine die Ringnut (102) in axialer Richtung begrenzende Wandung von der Bohrung (105) durchstoßen ist.

11. Heizvorrichtung (10) mit einer Wärmeübertragereinrichtung (12, 120) nach einem der Ansprüche 1 bis 10 und einer Steuereinheit (18) zur Steuerung des ein magnetischen Wechselfeld erzeugenden Elements (32, 141) und der Flächenheizelemente (24, 26, 28, 121, 123), wobei in dem Gehäuse (30,128) mindestens ein Fluidkanal (46, 56, 62, 66, 129, 132, 134, 137) angeordnet ist.

## Claims

1. A heat exchanger arrangement (12, 120) for a heating device (10) of a motor vehicle, having a housing (30, 128) for receiving an element (32, 141) which generates an alternating magnetic field, with an element which generates an alternating magnetic field, and at least one preferably metallic surface heating element (24, 26, 28, 121, 123) around which a fluid can flow on one side or on both sides, wherein a fluid inlet (14) and a fluid outlet (16) are arranged on the housing (30, 128), wherein a connecting flange (22) with an integrated fluid inlet (14) and fluid outlet (16) is provided, wherein the connecting flange (22) has a fixation arrangement (80a, 80b) on the inside for positioning the at least one surface heating element (24, 26, 28), **characterised in that** the connecting flange (22, 100, 100a) has a guiding arrangement (82, 109) for the element (32, 141) which generates an alternating magnetic field, in particular an induction coil unit (32, 34, 141).

2. The heat exchanger arrangement (12, 120) according to claim 1, **characterised in that** connecting openings (75a, 75b) for external fluid connecting lines which can be connected to the heat exchanger arrangement (12, 120) are provided.

3. The heat exchanger arrangement (12, 120) according to claim 2, **characterised in that** fluid connecting pieces (77, 112, 113) and/or the fluid connecting lines are integrally embodied with the connecting openings (75a, 75b) of the connecting flange (22, 100, 100a).

4. The heat exchanger arrangement (12, 120) according to one of the preceding claims, **characterised in that** the connecting flange (22, 100, 100a) is set up to guarantee a water- and dust-tight finish of the heat exchanger arrangement (12, 120).

5. The heat exchanger arrangement (12, 120) according to one of the preceding claims, **characterised in that** the connecting flange (22, 100, 100a) is twistable.

6. The heat exchanger arrangement (12, 120) according to one of the preceding claims, **characterised in that** the connecting flange (22, 100, 100a) has a fixation arrangement (76a, 76b, 76c, 76d, 78a, 78b, 78c, 78d) for the fixation of the connecting flange (22, 100, 100a) on the housing (30, 129) of the heat exchanger arrangement (12, 120).

7. The heat exchanger arrangement (12, 120) according to one of the preceding claims, **characterised in that** the at least one surface heating element (24, 26, 28, 121, 123) is a first surface heating element (24) which is arranged inside the element (32, 141) which generates an alternating magnetic field, and at least one second surface heating element (26, 123) arranged outside the element (32, 141) which generates an alternating magnetic field is provided.

8. The heat exchanger arrangement (12, 120) according to claim 7, **characterised in that** a further, third surface heating element (28, 121) adjacent to the second surface heating element (26, 123) is provided.

9. The heat exchanger arrangement (120) according to one of the preceding claims, **characterised in that** the connecting flange (100, 100a) has an annular groove (102) which is embodied such that it is open in the radial direction to the outside and is limited by the outer wall of a bore (105, 107) in the radial direction to the inside.

10. The heat exchanger arrangement (120) according to claim 9, **characterised in that** a wall limiting the annular groove (102) in the axial direction is penetrated by the bore (105).

11. A heating device (10) with a heat exchanger arrangement (12, 120) according to one of claims 1 to 10 and a control unit (18) for the control of the element (32, 141) which generates an alternating magnetic field and the surface heating elements (24, 26, 28, 121, 123), wherein at least one fluid channel (46, 56, 62, 66, 129, 132, 134, 137) is arranged in the housing (30, 128).

## Revendications

1. Ensemble formant échangeur de chaleur (12, 120) pour un dispositif de chauffage (10) d'un véhicule automobile, ledit dispositif de chauffage présentant un boîtier (30, 128) servant au logement d'un élément (32, 141) produisant un champ alternatif magnétique, et présentant au moins un élément chauffant de surface (24, 26, 28, 121, 123), de préférence métallique, pouvant être baigné d'un côté ou des deux côtés, par un fluide, où une entrée de fluide (14) et une sortie de fluide (16) sont disposées au niveau du boîtier (30, 128), où il est prévu une bride de raccordement (22) ayant une entrée de fluide (14) et une sortie de fluide (16) intégrées, où la bride de raccordement (22) présente, côté intérieur, un dispositif de fixation (80a, 80b) servant au positionnement de l'élément chauffant de surface (24, 26, 28) au moins au nombre de un, **caractérisé en ce que** la bride de raccordement (22, 100, 100a) présente un dispositif de guidage (82, 109) prévu pour l'élément (32, 141) produisant un champ alternatif magnétique, prévu en particulier pour un ensemble formant bobine à induction (32, 34, 141).

2. Ensemble formant échangeur de chaleur (12, 120) selon la revendication 1, **caractérisé en ce que** des ouvertures de raccordement (75a, 75b) sont prévues pour des conduites de raccordement externes pour un fluide, conduites qui peuvent être raccordées à l'ensemble formant échangeur de chaleur (12, 120).

3. Ensemble formant échangeur de chaleur (12, 120) selon la revendication 2, **caractérisé en ce que** des tubulures de raccordement (77, 112, 113) pour un fluide et / ou les conduites de raccordement pour un fluide sont conçues de façon monobloc avec les ouvertures de raccordement (75a, 75b) de la bride raccordement (22, 100, 100a).

4. Ensemble formant échangeur de chaleur (12, 120) selon l'une quelconque des revendications précédentes, **caractérisé en ce que** la bride de raccordement (22, 100, 100a) est montée pour garantir une fermeture étanche à l'eau et aux poussières de l'ensemble formant échangeur de chaleur (12, 120).

5. Ensemble formant échangeur de chaleur (12, 120) selon l'une quelconque des revendications précédentes, **caractérisé en ce que** la bride de raccordement (22, 100, 100a) peut être tournée.

6. Ensemble formant échangeur de chaleur (12, 120) selon l'une quelconque des revendications précédentes, **caractérisé en ce que** la bride de raccordement (22, 100, 100a) présente un dispositif de fixation (76a, 76b, 76c, 76d, 78a, 78b, 78c, 78d) servant à la fixation de la bride de raccordement (22, 100, 100a) sur le boîtier (30, 129) de l'ensemble formant échangeur de chaleur (12, 120).

7. Ensemble formant échangeur de chaleur (12, 120) selon l'une quelconque des revendications précédentes, **caractérisé en ce que** l'élément chauffant de surface (24, 26, 28, 121, 123) au moins au nombre de un est un premier élément chauffant de surface (24) qui est disposé à l'intérieur de l'élément (32, 141) produisant un champ alternatif électromagnétique, et il est prévu au moins un deuxième élément chauffant de surface (26, 123) disposé à l'extérieur de l'élément (32, 141) produisant un champ alternatif électromagnétique.

8. Ensemble formant échangeur de chaleur (12, 120) selon la revendication 7, **caractérisé en ce qu'**il est prévu un autre élément chauffant de surface (28, 121) - un troisième - disposé de façon contiguë au deuxième élément chauffant de surface (26, 123).

9. Ensemble formant échangeur de chaleur (120) selon l'une quelconque des revendications précédentes, **caractérisé en ce que** la bride de raccordement (100, 100a) présente une rainure annulaire (102) qui est réalisée en étant ouverte vers l'extérieur dans la direction radiale et qui est délimitée vers l'intérieur, dans la direction radiale, par la paroi extérieure d'un perçage (105, 107).

10. Ensemble formant échangeur de chaleur (120) selon la revendication 9, **caractérisé en ce qu'**une paroi délimitant la rainure annulaire (102) dans la direction axiale est traversée par le perçage (105).

11. Dispositif de chauffage (10) comprenant un ensemble formant échangeur de chaleur (12, 120) selon l'une quelconque des revendications 1 à 10, et comprenant une unité de commande (18) servant à la commande de l'élément (32, 141) produisant un champ alternatif magnétique, et servant à la commande des éléments chauffants de surface (24, 26, 28, 121, 123), où au moins un conduit de fluide (46, 56, 62, 66, 129, 132, 134, 137) est disposé dans le boîtier (30, 128).
